# EUROPEAN PATENT SPECIFICATION

(11) **EP 2 902 691 B1**
(45) Date of publication and mention of the grant of the patent: **14.11.2018**
(21) Application number: 14198245.4
(22) Date of filing: 16.12.2014
(51) Int. Cl.: B01D 19/00, F01D 25/18, F01M 13/04, F16N 19/00, F16N 39/00

(54) **Oil system**
Ölsystem
Système d'huile

(30) Priority: 17.01.2014 GB 201400795
(43) Date of publication of application: 05.08.2015
(73) Proprietor: Rolls-Royce plc, London SW1E 6AT (GB)
(72) Inventor: Butt, David, Derby, Derbyshire DE24 8BJ (GB)
(74) Representative: Rolls-Royce plc

(56) References cited:
- FR-A1- 2 922 126
- GB-A- 2 264 245
- GB-A- 2 499 620
- US-A1- 2009 120 296
- US-A1- 2013 313 049

## Description

The present disclosure concerns oil systems. More specifically the present disclosure may concern an oil system, an oil tank, a de-aerator and a gas turbine engine. The invention may have specific application to aero gas turbine engines and the remainder of the background is limited to discussion in this field for simplicity. Nonetheless this should not be considered limiting as the invention may have further application, both in alternative gas turbine engines and other systems and devices that utilise an oil system.

Aero gas turbine engines incorporate oil systems that circulate oil around the engine for lubrication and cooling of various of its components. The oil is for example sprayed onto bearings within bearing chambers, before being removed by scavenge lines and ultimately returned to an oil tank for re-use. As it circulates the oil tends to collect air, which if not removed would tend to degrade the performance of the oil and damage the transmission components. It is therefore well known to provide a de-aerator to separate the air and oil, deliver the air to a breather for exhausting overboard and returning the oil to the oil tank for re-circulation. The oil tank itself may act as a de-aerator or a separate de-aerator may be provided. Nonetheless, in prior art systems, the separated air is vented directly to the breather from the de-aerator exit.

In prior art systems there is a tendency for a quantity of oil mist to remain in the air flow even after separation. This can lead to visible mist leaving the breather. Mist can be mistaken for smoke and so may give rise to alarm even where there is no cause for concern. Further the remaining oil in the airstream may lead to greater than desired levels of oil consumption. Both disadvantages may be increased by the use of a pressure raising valve at the gas outlet. This may assist with maintaining a higher pressure in the de-aerator and/or oil tank, and therefore in the delivery of oil from the aforementioned device. The valve may however tend to atomise any remaining oil in the air flow. The atomised oil may have droplet sizes smaller than 10µm, and may therefore be more difficult to filter from the air flow before it is exhausted.

Particularly with respect to systems incorporating a pressure raising valve, various solutions to the problems described have been proposed, but each has had limited success. Such proposed solutions have for example included making structural changes to the pressure raising valve (e.g. creating labyrinth passages for the air flow to pass through and/or provision of a bypass).

US2009/0120296 discloses a cyclone-type bubble separator having a cooling mechanism (oil cooler) connected downstream thereof, and is provided with a relief mechanism that operates when the interior pressure in a main body increases. The fluid inside the main body escapes downstream of the cooling mechanism due to the operation of the cooling mechanism. In particular, preferably the relief mechanism is provided in a gas discharge portion that is connected to the main body.

GB2264245 discloses a centrifugal oil de-aerator comprising a centrifuging bowl which is mounted for rotation about its axis, and radial inclined blades mounted within the bowl at one end such that the oil to be de-aerated can be projected as a jet onto the blades. This causes the bowl to rotate at high speed to generate a de-aerating centrifugal force on the oil which is thrown outwards onto the inner surface of the bowl. The bowl is open at its end remote from the blades and the inner surface of the bowl widening out towards this open end. The de-aerator may form part of an oil circuit for lubricating roller bearings.

FR2922126 discloses a separator having a cyclone provided with a tangential inlet for intaking gas containing particles or oil drops to be eliminated, and an axial outlet opening for releasing the gas. A storage volume stores the gathered particles or drops. The cyclone is provided with a cylindrical channeling zone and without a conical lower zone. A base of the channeling zone communicates with the volume. The opening creates the depression between the outlet and the inlet by a communication realised between an aspiration conduit and a top part of the volume by an aspiration hole.

GB patent publication 2499620 discloses a fluid separator comprising a gravity separation chamber having an inlet duct for a mixture of gas and liquid, and a cyclonic inlet diverter D located within the gravity separation chamber. The cyclonic inlet diverter D includes a cyclonic inlet chamber connected to receive a mixture of gas and liquid from the inlet duct, a cyclonic separation chamber, a gas outlet at an upper end of the cyclonic separation clamber and a liquid outlet at a lower end of the cyclonic separation chamber. The cyclonic inlet chamber has a duct which is curved about a central point of the cyclone and is also of decreasing radius (in the direction of flow) from that point.

According to a first aspect of the invention there is provided an oil system according to claim 1..

As will be appreciated the de-aerator may not achieve complete separation of the oil and air. Consequently, and in particular, the de-aerator air flow may carry a remaining quantity of oil (e.g. in mist form). In accordance with the first aspect, air is not however removed directly from the oil system once it has left the de-aerator. Instead there is provision for additional potential separation of the oil from the air. Because the de-aerator air flow passes into the oil tank before air collected in the oil tank is finally delivered, there may be a further opportunity for separation of any remaining oil in the de-aerator air flow. Such additionally separated oil may then remain in the oil tank for eventual delivery as part of the oil tank oil flow. This oil would not then be delivered as part of an air flow output from the oil system. The effectiveness of this second de-aeration step may be increased as described further below.

The air outlet is provided with a pressure raising valve arranged in use to selectively block the air outlet when the pressure in the oil tank is below a predetermined threshold. While it may be advantageous to provide the pressure raising valve in order to assist with the delivery of oil from the oil outlet, such valves tend to atomise any oil present in an air flow that passes them. Atomised oil may be more difficult to capture subsequently and may give the appearance of smoke in the air flow. By reducing the oil content in the air flow that finally passes the pressure raising valve, the invention according to the first aspect may mitigate or eliminate this disadvantage. In other words the present invention may allow use of a pressure raising valve without significant atomisation of oil in the oil chamber air flow, there being little or no oil present in the oil chamber air flow to be atomised.

A further synergistic benefit of the use of the pressure raising valve is an increase in the average time spent by the de-aerator air flow in the oil tank, the pressure raising valve selectively blocking its exit. There may therefore be more time for remaining oil in the air flow exiting the de-aerator to be separated in the oil tank.

A first outlet nozzle is provided extending from the first outlet into the oil tank and directing in use the de-aerator air flow away from the air outlet of the oil tank. This may increase the likelihood of further oil separation and prevent direct flow from the first outlet to the air outlet.

The first outlet nozzle is arranged so that in use it directs the de-aerator air flow so as to be incident tangential to a side wall of the oil tank. This may further increase the effectiveness of further oil separation, encouraging wetting out of the oil on the side wall and/or centrifugal air oil separation.

In some embodiments the de-aerator is contained within the oil tank.

In some embodiments the de-aerator is a centrifugal de-aerator. Centrifugal deaerators may be particularly suitable, but as will be appreciated alternatives may also be provided e.g. a cascade ('waterfall') arrangement.

In some embodiments the de-aerator is substantially cylindrical with a side wall on which in use the air oil stream entering via the inlet travels and rotates.

In some embodiments the first outlet is coaxial with the cylindrical de-aerator and is located at a top wall of the de-aerator.

In some embodiments the oil system further comprises a breather in fluid communication with the air outlet. The breather may be arranged to remove oil droplets entrained in air passing through it, and return them to the oil tank. Such a breather may work effectively in combination with the present invention, as breathers tend to be most effective at removing larger oil droplets rather than smaller droplets (e.g. <10µm). With use of the present invention there are likely to be fewer such small oil droplets reaching the breather.

In some embodiments, in use, the oil system circulates oil around a circuit. The oil may be used for lubrication and/or cooling.

According to a second aspect of the invention there is provided a gas turbine engine comprising the oil system of the first aspect.

In some embodiments the gas turbine engine is an aero gas turbine engine. As will be appreciated however this is not intended to be limiting and the gas turbine engine may for example alternatively be arranged for use in marine, on-shore or off-shore power generation.

The skilled person will appreciate that a feature described in relation to any one of the above aspects of the invention may be applied mutatis mutandis to any other aspect of the invention.

Embodiments of the invention will now be described by way of example only, with reference to the Figures, in which:
**Figure 1** is a sectional side view of a gas turbine engine;
**Figure 2** is a cut-away schematic of part of an oil system according to an embodiment of the invention;
**Figure 3** is a cross-sectional view showing a pressure raising valve.

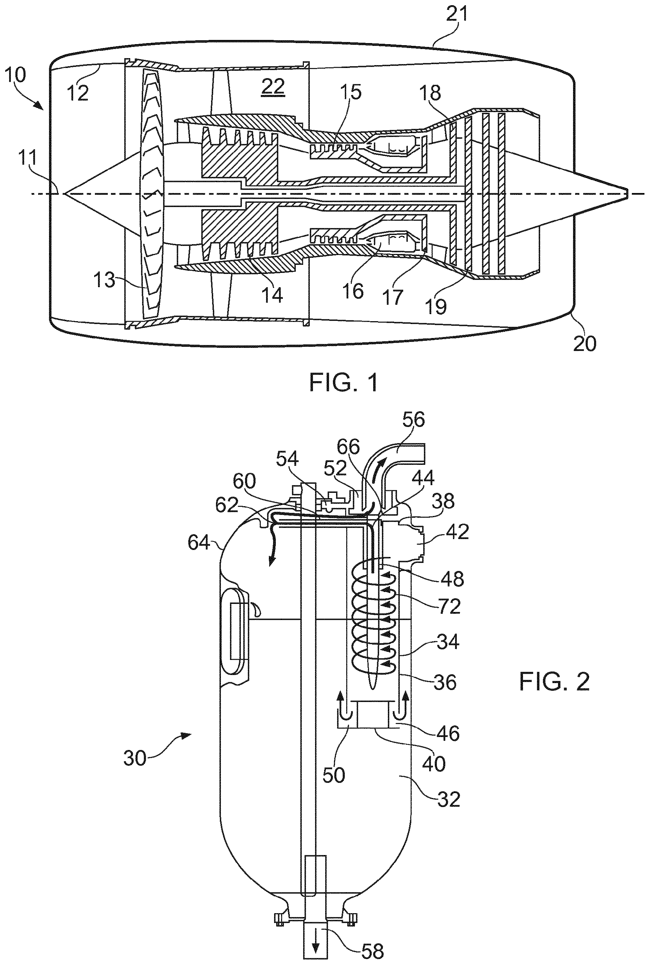

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Referring now to Figure 2, part of an oil system is generally shown at 30, the oil system being suitable for circulation of oil for lubrication and/or cooling of parts of a gas turbine engine such as gas turbine engine 10. The part 30 comprises an oil tank 32 contained within which is a centrifugal de-aerator 34.

The de-aerator 34 has a cylindrical side wall 36, a top wall 38 and a bottom wall 40. The de-aerator 34 has a fluid inlet 42 passing through the side wall 36 at a location adjacent the top wall 38.The de-aerator 34 also has a first outlet 44 and a second outlet 46.

The first outlet 44 passes through the centre of the top wall 38 and is provided with a feeder nozzle 48 extending downwards into the de-aerator 34, co-axial with the cylinder formed by the side wall 36.

The second outlet 46 comprises an annular gap 50 between the side wall 36 and the bottom wall 40.

The oil tank 32 has an air outlet 52 through a top wall 54 thereof. External to the oil tank 32 an air exhaust pipe 56 is in fluid communication with and extends away from the air outlet 52. At the distal end of the exhaust pipe 56 from the oil tank 32, the air exhaust pipe 56 is connected to a breather (not shown).

The oil tank 32 has an oil outlet 58 located at the bottom of the oil tank 32.

A first outlet nozzle 60 is provided in fluid communication with and extending from the first outlet 44 and extending into the oil tank 32. The first outlet nozzle 60 is angled so as its outlet 62 is directed away from the air outlet 52 and so as to direct fluid leaving the first outlet nozzle 60 substantially tangentially to and circumferentially around a cylindrical side wall 64 of the oil tank 32.

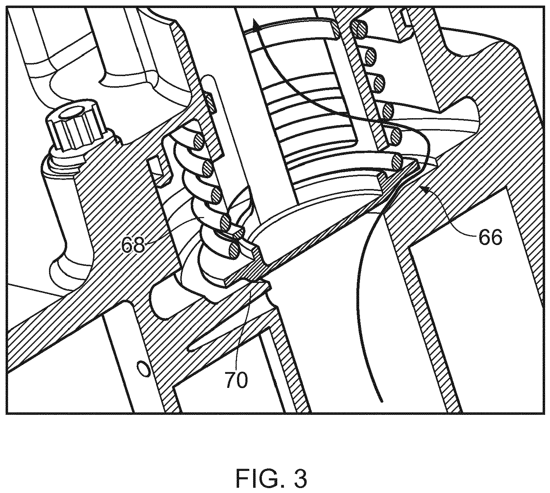

The air outlet 52 is provided with a pressure raising valve 66 (as best seen in Figure 3) which in this embodiment is a poppet valve biased by a spring 68 in a direction towards the oil tank 32 and a valve seat 70.

In use the part 30 is connected to the remainder of an oil system. The chamber defined by the oil tank 32 serves as a reservoir for oil. Oil leaves the tank 32 in an oil tank oil flow via the oil outlet 58. The pressure raising valve 66 in the air outlet 52 maintains an elevated pressure within the oil tank 32 and tends therefore to assist with forcing oil out of the oil tank 32 via the oil outlet 58 and on to an oil pump (not shown). Thereafter the oil is circulated within the remainder of the oil system serving to lubricate and/or cool various components of a gas turbine engine in which the oil system is installed. During such circulation the oil entrains air, which flows with the oil. The resulting air oil stream is then returned to the part 30 via the fluid inlet 42.

The air oil stream enters the de-aerator 34 and travels in a substantially spiral 72 manner, rotating on the side wall 36. The de-aerator 34 works by centrifugal force to separate at least some of the air from the oil. The swirling motion of the air oil stream tends to cause the lighter air to separate and collect towards the centre and at the top of the de-aerator 34, while the heavier oil tends to collect adjacent the side wall 36 and at the bottom of the de-aerator 34. Despite this the collected air may still contain small droplets of oil. The collected oil re-enters the oil tank 32 in a de-aerator oil flow via the second outlet 46, where it is used for re-circulation as previously described. The air (potentially still containing small droplets of oil) leaves the de-aerator 34 in a de-aerator air flow and enters the oil tank 32 via the feeder nozzle 48, first outlet 44, first outlet nozzle 60 and outlet 62. Because the outlet 62 is remote from and angles the air away from the air outlet 52, it tends to prevent the air from passing directly to the air outlet 52 before a further air oil separation step (explained further below) occurs. Both flows exiting the de-aerator 34, therefore flow directly into the same chamber (that defined by the oil tank 32).

The de-aerator air flow leaving the outlet 62 is incident on the cylindrical side wall 64 of the oil tank 32 above the level of the oil reservoir in a tangential manner. This tends to cause a similar centrifugal de-aeration effect as described with respect to the de-aerator 34. This additional spiralling and the increased residence time within the part 30 tend to cause remaining oil in the de-aerator air flow to 'wet-out' on the side wall 64 and to collect in the oil reservoir below. The remaining air tends to collect at the top of the oil tank 32. When the pressure in the oil tank 32 exceeds a particular threshold (approximately 5psi), it overcomes the biasing of the spring 68 and opens the pressure raising valve 66. This allows the release of the air in the oil tank 32 in an oil tank air flow via the air outlet 52, exhaust pipe 56 and breather (not shown). The indirect path travelled by the air from the outlet 62 to the air outlet 52 increases the time before it is exhausted, allowing further opportunities for the oil therein to separate out. It may therefore be considered that two de-aeration steps occur, one in the de-aerator 34 and one in the oil tank 32. Because the oil tank air flow contains less oil than it otherwise might, the oil lost to atmosphere will be reduced and any atomisation of oil by the pressure raising valve 66 will give rise to a less noticeable mist trail. It will be understood that the invention is not limited to the embodiments above-described and various modifications and improvements can be made without departing from the various concepts described herein. Except where mutually exclusive, any of the features may be employed separately or in combination with any other features and the invention extends to and includes all combinations and sub-combinations of one or more features described herein in any form of oil system, within the scope of the claims.

## Claims

1. An oil system comprising a de-aerator (34) and an oil tank (32), wherein the de-aerator (34) comprises a fluid inlet (42), a first outlet (44) having a first outlet nozzle (60) extending therefrom and a second outlet (46), the first (44) and second (46) outlets both feeding into the oil tank (32), and where the oil tank (32) comprises an air outlet (52) and an oil outlet (58), and where further the de-aerator (34) is arranged in use to at least partially separate an air oil stream entering via the fluid inlet (42) into a de-aerator air flow comprising air and a de-aerator oil flow comprising oil, the de-aerator air flow entering the oil tank (32) via the first outlet (44), wherein a first outlet nozzle (60) is provided extending from the first outlet (44) into the oil tank (32) and directing in use the de-aerator air flow away from the air outlet (52) of the oil tank (32) the first outlet nozzle (60) being arranged so that it directs the de-aerator air flow so as to be incident tangential to a side wall (64) of the oil tank (32), and the de-aerator oil flow entering the oil tank (32) via the second outlet (46), and where the oil tank (32) is arranged such that an oil tank airflow comprising air exits the oil tank (32) via the air outlet (52) and an oil tank oil flow comprising oil exits the oil tank (32) via the oil outlet (58), **characterised in that** the air outlet (52) is provided with a pressure raising valve (66) arranged in use to selectively block the air outlet (52) when the pressure in the oil tank (32) is below a predetermined threshold.

2. An oil system according to any preceding claim where the de-aerator (34) is contained within the oil tank (32).

3. An oil system according to any preceding claim where the de-aerator (34) is a centrifugal de-aerator.

4. An oil system according to any preceding claim where the de-aerator (34) is substantially cylindrical with a side wall (36) on which in use the air oil stream entering via the inlet (42) travels and rotates.

5. An oil system according to claim 4 where the first outlet (44) is coaxial with the cylindrical de-aerator and is located at a top wall (38) of the de-aerator (34).

6. An oil system according to any preceding claim where the oil system further comprises a breather in fluid communication with the air outlet (52).

7. An oil system according to any preceding claim where, in use, the oil system circulates oil around a circuit.

8. A gas turbine engine comprising the oil system of any of claims 1 to 7.

9. A gas turbine engine according to claim 8 that is an aero gas turbine engine.

## Patentansprüche

1. Ölsystem, das einen Entlüfter (34) und einen Öltank (32) umfasst, wobei der Entlüfter (34) einen Fluideinlass (42), einen ersten Auslass (44) mit einer sich von diesem erstreckenden ersten Auslassdüse (60) und einen zweiten Auslass (46) umfasst, wobei der erste (44) und der zweite (46) Auslass beide in den Öltank (32) speisen, und in dem der Öltank (32) einen Luftauslass (52) und einen Ölauslass (58) umfasst, und in dem ferner der Entlüfter (34) im Betrieb derart angeordnet ist, mindestens teilweise einen Luft-Öl-Strom, der über den Fluideinlass (42) in einen Luft umfassenden Entlüfterluftstrom gelangt, und einen Öl umfassenden Entlüfterölstrom zu trennen, wobei der Entlüfterluftstrom über den ersten Auslass (44) in den Öltank (32) gelangt, wobei eine erste Auslassdüse (60) bereitgestellt ist, die sich von dem ersten Auslass (44) in den Öltank (32) erstreckt und die im Betrieb den Entlüfterluftstrom von dem Luftauslass (52) des Öltanks (32) weg lenkt, wobei die erste Auslassdüse (60) angeordnet ist, sodass sie den Entlüfterluftstrom derart leitet, auftreffend tangential zu einer Seitenwand (64) des Öltanks (32) zu sein, und wobei der Entlüfterölstrom in den Öltank (32) über den zweiten Auslass (46) eintritt, und bei dem der Öltank (32) angeordnet ist, dass ein Luft umfassender Öltankluftstrom den Öltank (32) über den Luftauslass (52) verlässt und dass ein Öl umfassender Öltankölstrom den Öltank (32) über den Ölauslass (58) verlässt, **dadurch gekennzeichnet, dass** der Luftauslass (52) mit einem Druckerhöhungsventil (66) bereitgestellt ist, das im Betrieb derart angeordnet ist, selektiv den Luftauslass (52) zu blockieren, wenn der Druck in dem Öltank (32) unter einem vorbestimmten Schwellenwert liegt.

2. Ölsystem nach einem der vorhergehenden Ansprüche, bei dem der Entlüfter (34) innerhalb des Öltanks (32) enthalten ist.

3. Ölsystem nach einem der vorhergehenden Ansprüche, bei dem der Entlüfter (34) ein zentrifugaler Entlüfter ist.

4. Ölsystem nach einem der vorhergehenden Ansprüche, bei dem der Entlüfter (34) im Wesentlichen zylindrisch mit einer Seitenwand (36) ist, auf der im Betrieb der über den Einlass (42) eintretende Luft-Öl-Strom sich bewegt und rotiert.

5. Ölsystem nach Anspruch 4, bei dem der erste Auslass (44) koaxial mit der zylindrischen Entlüftungsanlage ist und an einer oberen Wand (38) des Entlüfters (34) angebracht ist.

6. Ölsystem nach einem der vorhergehenden Ansprüche, bei dem das Ölsystem ferner eine Entlüftung in Fluidkommunikation mit dem Luftauslass (52) umfasst.

7. Ölsystem nach einem der vorhergehenden Ansprüche, in dem, im Betrieb, das Ölsystem Öl durch einen Kreislauf zirkuliert.

8. Gasturbinentriebwerk, das ein Ölsystem nach einem der Ansprüche 1 bis 7 aufweist.

9. Gasturbinentriebwerk nach Anspruch 8, das ein Luftgasturbinentriebwerk ist.

## Revendications

1. Système d'huile comprenant un dégazeur (34) et un réservoir d'huile (32), ledit dégazeur (34) comprenant une d'entrée de fluide (42), une première sortie (44) possédant une première buse (60) de sortie s'étendant à partir de celle-ci et une seconde sortie (46), les première (44) et seconde (46) sorties alimentant toutes les deux le réservoir d'huile (32) et ledit réservoir d'huile (32) comprenant une sortie d'air (52) et une sortie d'huile (58), et en outre ledit dégazeur (34) étant agencé lors de l'utilisation pour séparer au moins partiellement un flux d'air-huile entrant par l'intermédiaire de l'entrée de fluide (42) en un écoulement d'air de dégazeur comprenant de l'air et un écoulement d'huile de dégazeur comprenant de l'huile, l'écoulement d'air de dégazeur entrant dans le réservoir d'huile (32) par l'intermédiaire de la première sortie (44), une première buse (60) de sortie étant disposée s'étendant de la première sortie (44) jusque dans le réservoir d'huile (32) et dirigeant, lors de l'utilisation, l'écoulement d'air de dégazeur au loin de la sortie d'air (52) du réservoir d'huile (32) la première buse (60) de sortie étant agencée afin qu'elle dirige l'écoulement d'air de dégazeur de façon à être incident tangentiellement à une paroi latérale (64) du réservoir d'huile (32), et l'écoulement d'huile de dégazeur entrant dans le réservoir d'huile (32) par l'intermédiaire de la seconde sortie (46) et ledit réservoir d'huile (32) étant agencé de sorte qu'un écoulement d'air de réservoir d'huile comprenant l'air sorte du réservoir d'huile (32) par l'intermédiaire de la sortie d'air (52) et qu'un écoulement d'huile de réservoir huile comprenant de l'huile sorte du réservoir d'huile (32) par l'intermédiaire de la sortie d'huile (58), **caractérisé en ce que** la sortie d'air (52) est dotée d'une soupape d'élévation de pression (66) agencée lors de l'utilisation pour bloquer sélectivement la sortie d'air (52) lorsque la pression dans le réservoir d'huile (32) est inférieure à un seuil prédéfini.

2. Système d'huile selon l'une quelconque des revendications précédentes, ledit dégazeur (34) étant contenu dans le réservoir d'huile (32).

3. Système d'huile selon l'une quelconque des revendications précédentes, ledit dégazeur (34) étant un dégazeur centrifuge.

4. Système d'huile selon l'une quelconque des revendications précédentes, ledit dégazeur (34) étant sensiblement cylindrique avec une paroi latérale (36) sur laquelle lors de l'utilisation le flux d'air-huile entrant par l'intermédiaire de l'entrée (42) se déplace et tourne.

5. Système d'huile selon la revendication 4, ladite première sortie (44) étant coaxiale avec le dégazeur cylindrique et étant située sur une paroi supérieure (38) du dégazeur (34).

6. Système d'huile selon l'une quelconque des revendications précédentes, ledit système d'huile comprenant en outre un reniflard en communication fluidique avec la sortie d'air (52).

7. Système d'huile selon l'une quelconque des revendications précédentes, lors de l'utilisation, ledit système d'huile faisant circuler de l'huile autour d'un circuit.

8. Moteur à turbine à gaz comprenant le système d'huile selon l'une quelconque des revendications 1 à 7.

9. Moteur à turbine à gaz selon la revendication 8 qui est un moteur à turbine à gaz aéronautique.
